(19) Europäisches Patentamt
European Patent Office
Office européen des brevets

(11) EP 0 661 306 B1

(12) EUROPÄISCHE PATENTSCHRIFT

(45) Veröffentlichungstag und Bekanntmachung des Hinweises auf die Patenterteilung:
**11.03.1998 Patentblatt 1998/11**

(51) Int Cl.[6]: **C08F 220/18**, C08F 220/30, C08F 220/34, C09D 133/06, C09D 133/14

(21) Anmeldenummer: **94119729.5**

(22) Anmeldetag: **14.12.1994**

(54) **Polymerdispersionen**

Polymer dispersions

Dispersions de polymères

(84) Benannte Vertragsstaaten:
**AT BE CH DE DK ES FR GB IT LI NL SE**

(30) Priorität: **24.12.1993 DE 4344391**

(43) Veröffentlichungstag der Anmeldung:
**05.07.1995 Patentblatt 1995/27**

(73) Patentinhaber: **Röhm GmbH**
**64293 Darmstadt (DE)**

(72) Erfinder:
- **Fölsch, Karl Josef, Dr.**
  **D-65128 Mainz (DE)**
- **Elser, Wilhelm**
  **D-64347 Griesheim (DE)**
- **Rausch, Ursula**
  **D-64347 Griesheim (DE)**
- **Tessmer, Dieter**
  **D-65428 Rüsselsheim (DE)**

(56) Entgegenhaltungen:
**EP-A- 0 381 029**

- **DATABASE WPI Section Ch, Week 8821 Derwent Publications Ltd., London, GB; Class A82, AN 88-142712 & JP-A-63 083 117 (MITSUBISHI RAYON) , 13.April 1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 661 306 B1

## Beschreibung

Stand der Technik

Zur Lackierung von Kunststoffen, die dazu dient, auf der Kunststoffoberfläche eine kohärente Schutz- bzw. Farbschicht auf Kunststoffbasis herzustellen, werden bisher fast ausschließlich lösungsmittelhaltige Systeme eingesetzt, da bislang allein diese den teilweise extremen Anforderungen von Seiten der Elektro- und der Phono-Industrie nahekommen konnten (H.F. Mark et al. Encyclopedia of Polymer Science & Engineering Vol. 3, 619 - 670, J. Wiley 1985, H. Rauch-Puntigam, Th. Völker, Acryl- und Methacrylverbindungen, S. 303 - 311, 327 - 331, Springer Verlag 1968).
Neben der Haftung auf den gebräuchlichen Kunststoffen wie Polyvinylchlorid, ABS, Polystyrol, Polycarbonat, Polyphenylenoxid ist die Beständigkeit gegenüber tensid- und alkoholhaltigen Haushaltsreinigern zu fordern.
Die US-A 5 139 882 hat gezeigt, daß durch Verwendung von (Meth)acrylsäureestern mit aromatischen Gruppen im Esterrest diese Anforderungen der Technik in erster Näherung erfüllt werden können. Da aber das Eigenschaftsspektrum solcher Lackierungssysteme doch gegenüber den Lacken auf Lösungsmittelbasis etwas abfällt, haben sie sich in der Praxis bisher nicht überzeugend durchsetzen können. Insbesondere ist die Härte dieser thermoplastischen Systeme unter Praxisbedingungen nicht ausreichend, speziell bei Beanspruchung bei höheren Temperaturen.
Ein weiterer Nachteil dieser Systeme besteht in mangelnder Kompatibilität gegenüber gebräuchlichen Filmbildehilfsmittel. Hier können nur bestimmte Filmbildehilfsmittel eingesetzt werden, die einerseits die Verfilmung dieser Systeme, die eine relativ hohe minimale Filmbildungstemperatur (MFT) besitzen, erleichtern und andererseits nicht zur Spannungskorrosion der Kunststoffe durch zu starkes Anlösen führen. Schließlich erscheint auch die Beständigkeit des Lackes gegenüber Alkoholen und Hautcremes noch verbesserungswürdig.

Aufgabe und Lösung

Es bestand somit weiterhin die Aufgabe, verbesserte Lacksysteme zur Verfügung zu stellen, welche die Schwächen des Standes der Technik nicht aufweisen, möglichst ohne bei den vorteilhaften Eigenschaften Abstriche hinnehmen zu müssen.
Insbesondere galt es:

- die Verträglichkeit mit Filmbildehilfsmitteln wie z.B. Butyldiglykol
- die Alkoholfestigkeit und
- die Härte und Beständigkeit des daraus hergestellten Lackes

zu verbessern bzw. zu erhöhen.
Es wurde nun gefunden, daß die Anforderungen des Standes der Technik von der vorliegenden Erfindung weitgehend erfüllt werden. Die Erfindung betrifft wäßrige Dispersionen von filmbildenden Polymerisaten FP insbesondere von Poly(meth)acrylsäureestern zum Überziehen von festen Kunststoffoberflächen wobei die Polymerisate mit Methoxyoligo- oder Polyethylenglykolen substituierte vinylische Monomere enthalten. Die Filmbildungstemperatur der Polymerisate PF liegt in der Regel über 0 Grad C, vorzugsweise im Bereich von > 0 bis 80 Grad C. Derartige Monomere können in der Regel durch die Formel I

$$R_2 - \overset{\overset{\displaystyle H}{|}}{C} = \overset{\overset{\displaystyle R_3}{|}}{C} - Q - (O\ CH_2 - CH_2)_n - OR_1 \qquad (I)$$

worin

$R_1$ für Methyl,
$R_2$ für Wasserstoff oder einen Alkylrest mit 1 bis 4 Kohlenstoffatomen oder einen Rest

$$-\overset{\overset{\displaystyle O}{\|}}{C}-OR$$

$R_3$ für Wasserstoff, Methyl oder einen Rest

$$-(CH_2)_m-\overset{O}{\overset{\|}{C}}-OR$$

bedeutet und

worin

Q für einen Rest

$$-\overset{O}{\overset{\|}{C}}-(Z-CH_2\ CH_2)_p-$$

worin Z die Bedeutung -S- oder $-NR_4$ und R die Bedeutung Alkyl mit 1 bis 6 Kohlenstoffatomen und $R_4$ die Bedeutung Wasserstoff oder Alkyl mit 1 bis 6 Kohlenstoffatomen besitzt oder Q einen Rest $-CH_2$ bedeutet und worin

n für eine Zahl von 3 bis 60, vorzugsweise bis 30

p und m für null oder eins

steht,
wiedergegeben werden.

Vorzugsweise betrifft die vorliegende Erfindung filmbildende Dispersionen von Poly(meth)acrylsäureestern FP aufgebaut aus

A. 99,5 bis 9,5 Gew.-%, vorzugsweise 75 bis 40 Gew.-% der Formel II

$$CH_2 = \overset{R''}{\overset{|}{C}} - \overset{O}{\overset{\|}{C}} - O(X)_a - (Y)_b - A \qquad (II)$$

worin

X für eine gegebenenfalls verzweigte Alkylengruppe mit 1 bis 6 Kohlenstoffatomen und

a für 0 oder 1

Y für Sauerstoff oder $NR_4'$, worin $R_4'$ Wasserstoff oder einen $C_1$-$C_6$-Alkylrest bedeutet

b für 0 oder 1 und

A für einen $C_6$-$C_{10}$-Arylrest, insbesondere Phenyl, gegebenenfalls mit $C_1$-$C_4$-Alkyl substituiert oder Naphthyl

steht
mit der Maßgabe, daß, wenn a für 0 steht, b ebenfalls 0 sein soll.

B. 0,5 bis 10 Gew.-% vorzugsweise 0,5 bis 5 Gew.-% mindestens eines Monomeren der Formel I, vorzugsweise eines mit Methoxyoligo- oder Methoxypolyethylenglykolen veresterten (Meth)acrylsäureesters der Formel I

C. 0 bis 90, vorzugsweise 10 bis 80 Gew.-% mindestens eines Vinylmonomeren der Formel III

$$CH_2 = \overset{R_5}{\overset{|}{C}} - T \qquad (III)$$

worin

T für einen Rest

$$-\overset{\overset{\displaystyle O}{\|}}{C}-OR_6,$$

wobei $R_6$ einen Alkyl- oder Cycloalkylrest mit 1 bis 18 Kohlenstoffatomen bedeutet oder für einen gegebenenfalls mit einer Methylgruppe substituierten Phenylrest steht und

worin

$R_5$ für Wasserstoff oder Methyl steht

D. 0 bis 15 Gew.-% vorzugsweise 1 bis 10 Gew.-% eines oder mehrerer zur Vernetzung - vorzugsweise zur Fremdvernetzung - geeigneten vernetzenden Monomeren FM, vorzugsweise eines die Acetessigestergruppe enthaltenden Monomeren der Formel IV

$$R_9-CH=\overset{\overset{\displaystyle R_8}{|}}{CH}-\overset{\overset{\displaystyle O}{\|}}{C}-L-R_7-L'-\overset{\overset{\displaystyle O}{\|}}{C}-CH_2-\overset{\overset{\displaystyle O}{\|}}{C}-R_{10}$$

(IV)

worin

$R_7$ für einen zweiwertigen organischen Rest mit 2 bis 10 Kohlenstoffatomen, insbesondere einer Alkylengruppe

und

$R_8$ für Wasserstoff oder für einen Alkylrest mit 1 bis 8 Kohlenstoffatomen oder für einen Rest $-CH_2-COOR_{11}$ oder für einen Rest $-COR_{12}$, worin $R_{11}$ die Bedeutung Alkyl mit 1 bis 6 Kohlenstoffatomen und $R_{12}$ die Bedeutung Alkyl mit 1 bis 6 Kohlenstoffatomen oder Phenyl besitzt

und

$R_9$ für Wasserstoff oder einen Rest $-COOR_{11}'$ worin $R_{11}'$ die Bedeutungen von $R_{11}$ besitzt, steht, mit der Maßgabe, daß $R_8$ und $R_9$ nicht gleichzeitig eine Carboxylgruppe besitzen sollen

und

$R_{10}$ für einen Alkylrest mit 1 bis 4 Kohlenstoffatomen und
L und L' unabhängig voneinander für -O-, -S- oder für $-NR_4''$ stehen, worin $R_4''$ die gleichen Bedeutungen wie $R_4$ besitzt,

sowie auch die üblichen, mehrfunktionellen Vernetzer. (Vgl. H. Rauch-Puntigam, Th. Völker, Acryl- und Methacrylverbindungen, S. 184, Springer-Verlag.
Als Verbindung der Formel IV kommt vorzugsweise 2-Acetoacetoxyethyl(meth)acrylat (AAEM) infrage.

E. 0 bis 5, vorzugsweise 0,9 bis 3 Gew.-% an radikalisch polymerisierbaren Carbonsäuren

F. 0 bis 20, Gew.-% an weiteren copolymerisierbaren Monomeren, wobei sich die Komponenten A bis F in der Regel zu 100 Gew.-% ergänzen.
Herstellung und Anwendung der erfindungsgemäßen, wäßrigen Polymerdispersionen können soweit wie möglich in Anlehnung an US-A 5 139 882 bzw. EP-A 381 029 erfolgen.

Als Monomerkomponente C kommen insbesondere Acryl- und Methacrylsäureester der Formel III, worin $R_2$ für $C_1$-$C_{18}$-insbesondere $C_1$-$C_6$-Alkyl, insbesondere für Methyl, Ethyl, Isopropyl, Butyl und 2-Ethylhexyl sowie Cyclohexyl

und 3,3,5-Trimethylcyclohexyl steht, infrage. Genannt seien vor allem Methylmethacrylat (MMA) und Ethylacrylat (EA), Butylmethacrylat (BMA), Isodecylmethacrylat (DMA), insbesondere in Kombination, wobei deren Summe vorzugsweise im Bereich 25 - 40 Gew.-% (bezogen auf die Gesamtheit der Monomeren) liegt. Beispielsweise stehen dabei MMA und EA im Verhältnis 10 : (20 ± 2) Gew.-Teile. Weiter kann die Monomerkomponente C in gewissen Anteilen Styrol bzw. dessen Alkylderivate wie α-Methylstyrol enthalten, bzw. auch ganz aus diesen aufgebaut sein.

Als Monomerkomponente A kommen insbesondere solche Monomeren der Formel II infrage, bei denen A für Phenyl und a und b für Null stehen oder worin a für 1 und X für eine Gruppe
$-CH_2-$, oder eine ggfls. verzweigte Gruppe $-C_3H_6-$ oder $-C_4H_8-$ steht.

Beispiele für Verbindungen der allgemeinen Formel II sind Phenyl(meth)acrylat, p-Methylphenyl(meth)acrylat, 1-Naphthyl(meth)acrylat, Benzyl(meth)acrylat, 2-Phenylethyl(meth)acrylat, 3-Phenyl-n-propyl(meth)acrylat, 2-Phenoxy-ethyl(meth)acrylat, 2-Phenylaminoethyl(meth)acrylat.
Als mit Methoxyoligoglykolen bzw. Methoxypropylglykolen veresterte (Meth)acrylsäureester der Formel I seien beispielsweise solche mit n = 7,2 (aus dem Alkohol Carbowax $^R$ 550), mit n = 16,3 (aus dem Alkohol Carbowax $^R$ 750) und mit n = 44,7 (aus dem Alkohol Carbowax $^R$ 2000) genannt.
Die im wesentlichen aus den Monomergruppen A, B und C aufgebauten und daher hydrophob eingestellten Polymerisate FP können aber noch geringe Mengen weniger hydrophobe bzw. sogar ausgesprochen hydrophile Monomere als Bausteine enthalten.
Als solche hydrophilen Monomere kommen z.B. die Monomeren der Gruppe E, d.h. die radikalisch polymerisiersierbaren Carbonsäuren wie beispielsweise die Acrylsäure, Methacrylsäure, Fumarsäure, Maleinsäure bzw. Maleinsäureanhydrid infrage.

Zu den weiteren copolymerierbaren Monomeren der Gruppe F zählen z.B. Monomere mit basischen Gruppen, wie n-Dimethylaminoethylmethacrylat oder Acryl- und Methacrylamide, die im Amidrest auch Alkyl-, Cycloalkyl- oder Arylgruppen enthalten können, oder Monomere mit hydrophilen Alkoholen im Esterrest, wie beispielsweise 2-[2-(2-Ethoxyethoxy)ethoxy]ethylmethacrylat, die, falls vorhanden, in Mengen bis 10 Gew.-%, bevorzugt unter 5 Gew.-% und bis 0,1 Gew.-% im Polymerisat eingebaut sein können.
Die signifikante Erhöhung der Alkoholfestigkeit und der Härte gelingt durch die Copolymerisation mit einem Vernetzungssystem FM gemäß Komponente D welches bei niedriger Temperatur härtet, insbesondere Acetoacetoxyethyl (meth)acrylat. Als Vernetzungspartner werden vorzugsweise wasserlösliche Di- bzw. Polyamine wie Ethylendiamin, bzw. Polyamine mit Oligoethylenoxid-Spacern wie z.B. Tri- oder Tetraethylenglycoldiamin eingesetzt. Als Polymerisationsverfahren kommen die an sich bekannten radikalischen Verfahren infrage (vgl. Th. Völker, H. Rauch-Puntigam, Acryl- und Methacrylverbindungen, Springer-Verlag 1967; Kirk-Othmer, Encyclopedia of Chemical Technology, 3rd. Ed. Vol. 18, 720 - 744, Vol. 1, 386 - 413, J. Wiley). Vorteilhafterweise kann die Emulsionspolymerisation nach dem Zulaufverfahren angewendet werden.
Dabei legt man beispielsweise in einem geeigneten heizbaren Reaktionsgefäß mit Rührwerk, Rückflußkühler und Zulaufgefäß eine wäßrige Phase, enthaltend einen Emulgator wie z.B. die Salze einer langkettigen Fettsäure sowie einen wasserlöslichen Initiator wie z.B. Ammoniumperoxodisulfat vor und erwärmt beispielsweise auf 80 Grad C.
Zu dieser Lösung dosiert man eine wäßrige Emulsion der Monomeren der Gruppen A, B und gegebenenfalls C bis F, die den Emulgator sowie Initiator enthält in ca. der gleichen Gewichtsmenge Wasser bei der gewählten Temperatur innerhalb einiger Stunden - als Anhalt seien 4 Stunden genannt - zu und hält noch kürzere Zeit, beispielsweise 1 Stunde bei erhöhter Temperatur, um dann abkühlen zu lassen.
Zur anschließenden Endpolymerisation wird bei erhöhter Temperatur nochmals Initiator, beispielsweise ein Redoxinitiator wie z.B. 1,4-Diisopropylbenzolmonohydroperoxid zusammen mit Natriumhydroxymethylsulfinat zugesetzt.
Nach dem Abkühlen der Dispersion z.B. auf ca. 40 Grad C erfolgt die Konfektionierung durch Zugabe eines weiteren Emulgators sowie ggfs. eines Entschäumers und Konservierungsmittels.

In den erfindungsgemäßen wäßrigen Dispersionen sind die (Meth)acrylatpolymeren vorteilhafterweise nach dem Kern-Schale-Modell mehrphasig aufgebaut. Im einfachsten Fall ist hierbei ein Polymerpartikel als Kern von weiterem Polymermaterial, das gegenüber dem Kernmaterial vorteilhafterweise eine andere Zusammensetzung hat, umhüllt. Solche Polymerstrukturen lassen sich wie bekannt besonders einfach durch Emulsionspolymerisation herstellen [Journal of Polymer Science, Vol. 22, 1365 - 1372 (1984)]. Daher stellt man die erfindungsgemäßen wäßrigen Polymerdispersionen am vorteilhaftesten durch Polymerisation der dafür geeigneten Monomeren in wäßriger Emulsion, teilweise auch in Suspension, nach einschlägig bekannten Verfahren her (s. dazu H. Rauch-Puntigam, Th. Völker, "Acryl- und Methacrylverbindungen", Seiten 217 bis 228, Springer-Verlag, Heidelberg 1967; Ullmann's Encyclopädie der Technischen Chemie, 4. Auflage, Band 19, Seiten 11 bis 14 und 125 bis 141, Verlag Chemie 1980).

Zum Erreichen eines mehrphasigen Aufbaus der dispergierten Polymerteilchen werden bei der Emulsionspolymerisation bekanntermaßen nacheinander verschiedene Monomerzusammensetzungen in denselben Polymerisationsansatz eingegeben und jeweils unter den Bedingungen der Emulsionspolymerisation polymerisiert. Der Aufbau der für die Lackierung von Kunststoff-Oberflächen erfindungsgemäß dispergierten Polymerteilchen FP kann vorteilhaft so vorgenommen werden, daß zunächst ein Kern mit einem hohen Anteil, d.h. mit mehr als 70 Gew.-%, besonders

mit 90 bis 99 Gew.-%, an (Meth)acrylsäureester-Bausteinen - sowohl mit Alkyl- als auch mit Arylestergruppen - hergestellt wird, wobei noch in Mengen von etwa 0,5 bis 5 Gew.-% mehrfunktionelle Monomere, vom Typ D, wie beispielsweise Glykoldimethacrylat, Butandiol-1,4-diacrylat, Allylmethacrylat, Triallylcyanurat, mit einpolymerisiert werden können. Die mehrfunktionellen Monomeren sorgen für eine gewisse gewünschte Vernetzung des Kerns und bringen Pfropfstellen für das Anbinden der Polymerschale an den Kern. In der Polymerschale bzw. den Polymerschalen sind 30 bis 100 Gew.-%, besonders 40 bis 80 Gew.-% der in das Gesamt-Kern-Schalen-Polymerisat eingebrachten Acryl- und/oder Methacrylsäureestern mit aromatischen Gruppen als bzw. im Esterrest, neben anderen Monomeren insbesondere Acryl- und/oder Methacrylsäurealkylstern mit 1 bis 10 C-Atomen im Alkylrest, eingebaut. Das Gewichtsverhältnis von Acryl- bzw. Methacrylsäureestern mit aromatischen Gruppen der Formel II zu den Acryl- bzw. Methacrylsäurealkylestern der Formel III liegt hierbei im Bereich von 30 : 70 bis 70 : 30.

Um den Gehalt an dem relativ teuren Monomeren der Gruppe D, insbesondere an 2-Acetoacetoxyethyl(meth) acrylat (AAEM) möglichst gering zu halten, ist ein Kern-Schale-Aufbau mit einem mittels der genannten mehrfunktionellen Monomeren vernetzten Kern und dem AAEM als Vernetzer in der Schale vorteilhaft.

Die mit 0 bis 5 Gew-% im Polymerisat FP eingebauten polymerisierbaren Carbonsäuren können statistisch in dem Polymerisat verteilt sein oder können beim Vorliegen von Kern-Schale-Polymerisaten entweder vorwiegend in dem Kern oder vorwiegend in der Schale, bzw. den Schalen, als auch über die Kern-Schalen-Phasen etwa gleichmäßig oder auch ungleichmäßig verteilt, vorhanden sein.

Die Emulsionspolymerisation wird mit den dafür bekannten, allgemein üblichen, nichtionischen, kationischen und anionischen Emulgatoren, wie z.B. den Alkali- und Ammoniumsalzen von sulfatierten Fettalkoholen, aromatischen Sulfonsäuren oder sulfierten Ethylenoxidaddukten durchgeführt.
Geeignete anionische Emulgatoren sind z.B. sulfierte und mit Alkali neutralisierte, oxethylierte Alkylphenole, die z.B. aus Nonylphenol- oder Triisobutylphenoladdukten mit 3 bis 30 Ethylenoxideinheiten pro Molekül hergestellt sein können.
Es kann nach dem Batchverfahren oder nach einem Zulaufverfahren wie dem Monomerzulauf- oder dem Emulsionszulaufverfahren vorgegangen werden. Mit besonderem Vorteil bedient man sich des Emulsionszulaufverfahrens. Bei diesem Verfahren wird nur ein Teil der Wasserphase, in der Regel 10 bis 70 % der Gesamtmenge im Polymerisationsgefäß vorgelegt. Im verbleibenden Teil der Wasserphase, die in der Regel einen Teil des Emulgiermittels enthält, werden die Monomerenphasen unter Bedingungen, unter denen noch keine Polymerisation eintritt, emulgiert und diese Emulsionen werden nacheinander in das Reaktionsgefäß eingeführt, wo Polymerisationsbedingungen herrschen.
Die Verfahren können in mannigfaltiger Weise abgewandelt werden. So kann man z.B. den Initiator oder einen Teil des Emulgiermittels getrennt von den Monomerphasen allmählich zulaufen lassen oder portionsweise eintragen. Als Polymerisationsinitiatoren werden überwiegend Alkali- oder Ammoniumperoxodisulfate verwendet, jedoch können daneben oder stattdessen auch andere, vorzugsweise wasserlösliche Initiatoren, wie z.B. 4,4'-Azobis-4,4'-dicyanovaleriansäure oder Redoxsysteme, wie Peroxosulfate, Sulfoxyverbindungen und Eisensalze oder Wasserstoffperoxide und Eisen-II-Salze, eingesetzt werden.
Die letzteren werden getrennt von den Monomerphasen zugesetzt, da sie schon bei Raumtemperatur die Polymerisation auslösen. Die Umsetzungstemperatur richtet sich nach der Zerfallstemperatur des Initiators und liegt im allgemeinen zwischen 10 und 100 Grad C.
Die Polymerisatkonzentration in den Dispersionen liegt bei deren Herstellung im Bereich von etwa 30 bis 70 Gew.-% Feststoff und die Viskositäten der Polymerdispersionen liegen im allgemeinen im Bereich von 10 bis 5 000 mPa s (ISO 2555).
Die Teilchengröße der Emulsionspolymerisate liegt vorteilhaft im Bereich von 20 bis 600 nm, vorzugsweise im Bereich von 50 bis 400 nm. (Bestimmung durch Photonenkorrelationsspektroskopie, auch als Autokorrelationsspektroskopie bekannt, mit dem Nano-Sizer TDM der Firma Coulter Electronics, Ltd., Luton, Beds.).

Die Polymerisate haben in der Regel minimale Filmbildungstemperaturen (MFT) im Bereich von 0 Grad C bis ca. 100 Grad C, beispielsweise solchen von ca. 20 Grad C bis 80 Grad C. (Ullmanns Encyklopädie der technischen Chemie, 4. Auflage, Band 19, Seiten 17, 19 und 141, DIN 53 787).

Die erfindungsgemäßen Kunststoff-Oberflächenbeschichtungsmittel haben vor allem Bedeutung für die Aufbringung von Überzügen, für klare und pigmentierte Überzüge, als Dekor- oder Schutzüberzüge, auf Halbzeug- oder Fertigteilen z.B. aus thermoplastischen Kunststoffen (vgl. H.F. Mark, Encyclopedia of Polymer Science & Engineering, Vol. 3, loc.cit.). Als Polymere für zu beschichtende Teile aus thermoplastischen Kunststoffen mit den erfindungsgemäßen wäßrigen Polyacrylat-Systemen sind insbesondere Polystyrol, schlagfestes Polystyrol wie z.B. Styrol-Butadien-Copolymerisate oder Acrylnitril-Butadien-Styrol-(ABS)-Copolymerisate, Polycarbonat, Polymethylmethacrylat, Polyphenylenoxid (PPO), Hart-Polyvinylchlorid (PVC), Blends zwischen Polycarbonat und ABS-Copolymerisaten geeignet.
Die Verwendung der erfindungsgemäßen wäßrigen Polyacrylat-Systeme ist besonders vorteilhaft, da sich aus diesen auf den verschiedenen Polymerisaten gut haftende, wasser- und alkoholbeständige Überzüge bilden, auch unter dem Gesichtspunkt, daß in vielen Fällen in einem Gebrauchsartikel verschiedene Kunststoffe verarbeitet sind. Dadurch läßt sich auf Kunststoff-Oberflächen der Gebrauchsartikel, auch bei Aufbau aus verschiedenen Polymermaterialien, eine

gleichmäßige Farbqualität realisieren.

Bei der Lackierung wird die wäßrige Polymerdispersion auf den zu schützenden Gegenstand mit der Kunststoff-Oberfläche appliziert. Dazu werden vorteilhaft Polymerdispersionen, die als solche durch Emulsionspolymerisation hergestellt werden, gegebenenfalls nach Verdünnung mit Wasser, eingesetzt. Insbesondere können zur Filmbildungsverbesserung der Polymerisate auf den Kunststoff-Oberflächen in bekannter Weise Filmbildungshilfsmittel, wie z.B. Butyldiglykol, mit der Polymerdispersion in Mengen von 2 bis 20 Gew.-%, bezogen auf die Polymerisatmenge ohne Beeinträchtigung der Stabilität des Systems aufgebracht werden. Die Filmbildungshilfsmittel wirken als temporäre Weichmacher. Sie verdunsten beim Trocknen und beim Lagern der beschichteten Kunststoffe aus dem Überzug, wodurch dieser seine eigentliche Härte schnell erreicht.

Den Polymerdispersionen können außer den Filmbildungshilfsmitteln die für Polymerlacke üblichen Zusätze wie sonstige Hilfsstoffe, Dispergiermittel, Entschäumer, Stabilisatoren, Lichtschutzmittel, insbesondere die üblichen Pigmente und Füllstoffe in den üblichen Mengen zugesetzt werden (Vgl. Ullmann's Encyclopedia of Industrial Chemistry 5th Ed. Vol. A20, pg. 459 - 507, VCH 1992).

Die Aufbringung der Überzüge kann nach den gängigen Verfahren, wie z.B. durch Tauchen, durch Aufsprühen mit einer handegeführten Spritzpistole oder auch maschinell, durch Walzenauftrag, durchgeführt werden. (Ullmanns Encyklopädie der technischen Chemie, 4. Auflage, Band 15, Seiten 343 bis 345 und Seiten 688 bis 695).

Die folgenden Beispiele dienen zur Erläuterung der Erfindung.

## BEISPIELE

### A. Herstellung des dispergierten Polymerisats F

Beispiel A-1:

In einem Reaktionsgefäß mit 2 1 Fassungsvermögen, ausgerüstet mit Rückflußkühler, Rührwerk und Zulaufgefäß, werden 0,81 g Natriumlaurylsulfat und 0,54 g Ammoniumperoxodisulfat in 432 g entsalztem Wasser bei 20 Grad C gelöst und die Lösung auf 80 Grad C erwärmt.

Zu dieser Lösung wird eine Emulsion aus folgenden Bestandteilen bei 80 Grad C unter Rühren innerhalb von 4 Stunden zudosiert:

| | |
|---|---|
| 496,8 g | Benzylmethacrylat |
| 133,2 g | Ethylacrylat |
| 72,0 g | Methylmethacrylat |
| 18,0 g | Methoxypolyethylenglykol-550-methacrylat |
| | (Monomer der Formel I, $R_1 = CH_3$, n = ca. 7,2) |
| 6,48 g | Natriumlaurylsulfat |
| 2,16 g | Ammoniumperoxodisulfat |
| 745,0 g | entsalztes Wasser |

Nach Zulaufende wird der Ansatz noch eine Stunde bei 80 Grad C gehalten und dann auf Raumtemperatur abgekühlt, hierbei erfolgt zur Endpolymerisation bei 70 Grad C die Zugabe von 0,9 g 1,4-Diisopropylbenzolmonohydroperoxid und 0,6 g Natriumhydroxymethylsulfinat. Nach Abkühlen der Dispersion auf 40 Grad C erfolgt die Zugabe von 54 g Octylphenoxypolyethoxyethanol (mittlerer Ethoxylierungsgrad 9). Anschließend wird die Dispersion auf pH 9,0 eingestellt und filtriert.

Die Dispersion hat einen Trockengehalt von 40 %.

Weitere Polymerisatzusammensetzungen (Beispiele A-3 bis A-12) siehe Tabelle I.

Beispiel A-2:

Die Herstellung erfolgt analog Beispiel 1, jedoch über Kern/Schale-Aufbau. Nach Dispersionsherstellung erfolgt eine Vernetzung mit Diamin.

Der 1. Zulauf (Kern) ist hierbei eine Emulsion bestehend aus:

| | |
|---|---|
| 214,2 g | Benzylmethacrylat |
| 133,2 g | Ethylacrylat |
| 9,0 g | Methoxypolyethylenglykol-550-methacrylat |

(fortgesetzt)

| | |
|---|---|
| 3,6 g | Allylmethacrylat |
| 3,24 g | Natriumlaurylsulfat |
| 2,7 g | Octylphenoxypolyethoxyethanol (~9 Mol Ethylenoxid) |
| 1,08 g | Ammoniumperoxodisulfat |
| 372,5 g | entsalztes Wasser |

die innerhalb von 2 Stunden zugegeben wird.

Nach einer Pause von 30 Minuten wird der Zulauf 2 (Schale) bestehend aus

| | |
|---|---|
| 243,0 g | Benzylmethacrylat |
| 72,0 g | Methylmethacrylat |
| 36,0 g | 2-Acetoacetoxyethylmethacrylat |
| 9,0 g | Methoxypolyethylenglykol-550-methacrylat |
| 3,24 g | Natriumlaurylsulfat |
| 2,7 g | Octylphenoxypolyethoxyethanol (~9 Mol Ethylenoxid) |
| 1,08 g | Ammoniumperoxodisulfat |
| 372,5 g | entsalztes Wasser |

innerhalb von 2 Stunden zugegeben.

Nach Zulaufende wird der Ansatz noch 1 Stunde bei 80 Grad C gehalten und dann auf Raumtemperatur abgekühlt, hierbei erfolgt bei 70 Grad C eine Redoxendpolymerisation (wie unter Beispiel 1 beschrieben). Bei 40 Grad C erfolgt die Zugabe von 48,6 g Octylphenoxypolyethoxyethanol (mittlerer Ethoxylierungsgrad 9).

Beispiel A-7 (Vergleich):

In einem Reaktionsgefäß mit 2 l Fassungsvermögen, ausgerüstet mit Rückflußkühler, Rührwerk und Zulaufgefäß werden 0,81 g Natriumlaurylsulfat und 0,54 g Ammoniumperoxodisulfat in 432 g entsalztem Wasser bei 20 Grad C gelöst und die Lösung auf 80 Grad C erwärmt.

Zu dieser Lösung wird eine Emulsion aus folgenden Bestandteilen bei 80 Grad C unter Rühren innerhalb von 4 Stunden zudosiert:

| | |
|---|---|
| 496,8 g | Benzylmethacrylat |
| 136,8 g | Ethylacrylat |
| 72,0 g | Methylmethacrylat |
| 14,4 g | Methacrylsäure |
| 6,48 g | Natriumlaurylsulfat |
| 2,16 g | Ammoniumperoxodisulfat |
| 745,0 g | entsalztes Wasser |

Nach Zulaufende wird der Ansatz noch eine Stunde bei 80 Grad C gehalten und dann auf Raumtemperatur abgekühlt, hierbei erfolgt zur Endpolymerisation bei 70 Grad C die Zugabe von 0,9 g 1,4-Diisopropylbenzolmonohydroperoxid und 0,36 g Natriumhydroxymethylsulfinat. Nach Abkühlung der Dispersion auf 40 Grad C erfolgt die Zugabe von 54 g Octylphenoxypolyethoxyethanol (mittlerer Ethoxylierungsgrad 9). Anschließend wird die Dispersion auf pH~9,0 eingestellt und filtriert.

Die Dispersion hat einen Trockengehalt von 40 %.

Weitere Polymerisatzusammensetzungen (Beispiel 2 bis 12) siehe Tabelle.

B. Anwendung der Polymerdispersion

B-I. Farbherstellung

| | |
|---|---|
| 617,5 g | Dispersion 40 %ig |
| 10,0 g | Dispergierhilfsmittel, 40 %ig nichtionisch |
| 5,5 g | Entschäumer |
| 49,5 g | Diäthylenglykolmonobutyläther |
| 178,5 g | Eisenoxidschwarz |
| 64,0 g | Bariumsulfat, gefällt |
| 75,0 g | Talkum |
| 1000,0 g | werden zusammengeführt und 24 Stunden in der Kugelmühle dispergiert. |

Für Beispiele 7 und 10 wird die Farbe ohne weiteren Zusatz eingesetzt. Für die Beispiele 2, 6, 11 und 12 werden vor der Verarbeitung 30 g einer 10 %igen Lösung von Triäthylenglykoldiamin zugesetzt.

B-II. Herstellung der Anstriche

Farben der unter I. genannten Zusammensetzung werden mit einer Aufziehrakel auf Kunststoffplättchen einer Größe von 120 x 70 x 3 mm aufgetragen, 20 Min. bei 70 Grad C im Umluftofen und 48 Stunden bei 23 Grad C und relativer Luftfeuchtigkeit getrocknet. Die Trockenschichtdicke der Anstriche liegt bei ca. 40 µ.

B-III. Anstrichprüfung

a) Haftung

Die Haftfestigkeit der Anstriche wird nach dem Gitterschnitt-Test gemäß DIN 53151 geprüft. Die Prüfbedingungen werden zusätzlich verschärft, indem man auf die Prüffläche nach Anbringen der Schnitte ein Haftklebeband aufbringt und ruckartig unter einem Winkel von 90 Grad abreißt.

b) Alkoholfestigkeit

Zur Bestimmung der Alkoholfestigkeit wird ein mit Alkohol getränkter weißer Filzstreifen unter einer Belastung von 450 g/cm$^2$ mit einer Geschwindigkeit von 15 cm/sec. auf einer Strecke von 6,5 cm hin- und herbewegt. Beurteilt wird die Intensität der Filzanfärbung durch abgelöste Schwarzpigmentteilchen nach 10 - 25 Doppelhüben und die Veränderung der Oberfläche (Rillenbildung, Erweichung).

c) Creme- und Sonnenölbeständigkeit

Die Prüfungen werden an auf schlagfestem Polystyrol aufgetragenen Anstrichen durchgeführt.

Ein mit Hautcreme bzw. Sonnenöl "getränkter" Filzstreifen (45 x 55 mm) wird auf den Anstrich gelegt, mit einem 1 kg Gewicht belastet und 16 Stunden bei 70 Grad C im Umluftofen gelagert.

Beurteilt werden Veränderungen der Oberfläche wie Blocken, Quellung bzw. Blasenbildung und Erweichung.

d) Verpackungstest

Die Prüfungen erfolgen wiederum an Anstrichen, die auf schlagfestes PS aufgetragen wurden. Verpackungsmaterial, bestehend aus einer ca. 70 um starken Polyethylenfolie und einem darüber plazierten Styroporblock wird mit einem Gewicht belastet (entsprechend einem Druck von 200 - 300 g/m$^2$) und 72 Stunden bei 60 Grad C im Ofen gelagert.

Auftretendes Verblocken und Angriff der Oberfläche werden beurteilt.

e) Ergebnis

Wie aus der nachfolgenden Tabelle II hervorgeht, zeigen die beschriebenen Dispersionsanstriche im Vergleich zu ähnlich aufgebauten, in der US-A 51 39 882 beschriebenen thermoplastischen Produkten vor allem in der Creme- und Sonnenölbeständigkeit und im Verpackungstest deutlich bessere Ergebnisse und auch die Alkoholbeständigkeit wurde noch erheblich verbessert.

TABELLE I

Zusammensetzung nach Monomeren [Gew.-Teile]

| Beispiel Nr. | Gruppe A Benzylmethacrylat | Ethylacrylat | Gruppe C Methylmethacrylat | Butylmethacrylat | Isodecylmethacrylat | Gruppe B Methoxypolyethylenglykol-methacrylat n=ca 7,2 | n=ca 12,5 | n=ca.16,3 | n=ca.44,7 | Gruppe D | Gruppe E (Meth)acrylsäure | Gruppe F | Fest% / d/nm | Verhalten [1] |
|---|---|---|---|---|---|---|---|---|---|---|---|---|---|---|
| A-1 | 69 | 18,5 | 10 | | | | 2,5 | | | | | | 39,6 / 186 | (+) |
| A-2 | Kern: 59,5 [3]<br>Schale: 67,5 | 37 | 20 | | | | 2,5<br>2,5 | | | 1 AMA [4]<br>10 AAEM [2] | | | 39,8 / 218 | (+) |
| A-3 | 69 | 18,5 | 10 | | | | | 2,5 | | | | | 39,3 / 196 | (+) |
| A-4 | 69 | 18,5 | 10 | | | | | | 2,5 | | | | 38,8 / 220 | (+) |
| A-5 | 69 | 18,5 | 10 | | | 2,5 | | | | | | | 39,5 / 238 | (+) |
| A-6 | 69 | 18,5 | | | | | 2,5 | | | 10 AAEM [2] | | | 40,7 / 206 | (+) |
| A-7 | 69 | 19 | 10 | | | | | | | | 2 | | 40,0 / 186 | (-) |
| A-8 | 69 | 19 | 10 | | | | | | | | | 2,5 [5] | 38,5 / 208 | (+) |
| A-9 | 67 | 20 | 10 | | | | | | | 3 ATPOL [6] | | | 39,7 / 220 | (+) |
| A-10 | 69 | 18,5 | 10 | | | | 2,5 | | | | | | 39,2 [7] / 240 | (+) |
| A-11 | Kern: 59,5 [3]<br>Schale: 67,5 | | 20 | 37 | | | 2,5<br>2,5 | | | 10 AAEM [2] | 1 | | 39,8 / 184 | (+) |
| A-12 | 69 | | | | 18,5 | | 2,5 | | | 10 AAEM [2] | | | 39,7 / 220 | (+) |

LEGENDE ZU TABELLE 1

1) Verhalten bei Zugabe von 15 % Butyldiglykol/ pH = 9,0
(+) = Stabil
(-) = Koagulation
2) AAEM = 2-Acetoacetoxyethylmethacrylat
3) Kern-Schalepolymer im Gew.-Verhältnis 1 : 1
4) AMA = Allylmethacrylat
5) N-Acryloyl-2-amino-2-methylpropan-sulfonsäure
6) ATPOL HD 745 = Polyoxyallylalkohol verethert mit 23,5 Mol Ethylenoxid
7) pH = 9,4

## TABELLE II

| Anstrich hergestellt aus: | Alkoholbeständigkeit | Creme- u. Öl-Beständigkeit | Verpackungstest |
|---|---|---|---|
| Beispiel A-7 (Vergleichsbeispiel) | Nach 25 DH Anfärbung des Filzes und Rillenbildung auf der Oberfläche | Erweichung, starkes Verblocken, starker Abdruck des Filzes auf Oberfläche | Starkes Anhaften der Folie (Verblocken) starkter Abdruck auf der Oberfläche |
| Beispiel A-10 | Nach 25 DH Anfärbung des Filzes und Rillenbildung auf der Oberfläche | Erweichung, starkes Verblocken, starker Abdruck des Filzes auf Oberfläche | Starkes Anhaften der Folie (Verblocken) starker Abdruck auf der Oberfläche |
| Beispiel A-2 | Nach 25 DH prakt. keine oder nur sehr geringe Filzanfärbung und keine Rillenbildung auf der Oberfläche | Kein Verblocken, kein Angriff der Oberfläche | Kein Verblocken, kein Anhaften der Folie und kein Abdruck auf der Oberfläche |
| Beispiel A-6 | Nach 25 DH prakt. keine oder nur sehr geringe Filzanfärbung und keine Rillenbildung auf der Oberfläche | Kein Verblocken, kein Angriff der Oberfläche | Kein Verblocken, kein Anhaften der Folie und kein Abdruck auf der Oberfläche |
| Beispiel A-8 | schon nach 10 DH starkes Anlösen, nach 25 DH ist der Anstrich fast vollständig weggescheuert | nicht geprüft | nicht geprüft |
| Beispiel A-11 | Nach 25 DH prakt. keine Filzanfärbung und keine Rillenbildung auf der Oberfläche | Kein Verblocken, kein Angriff der Oberfläche | Kein Verblocken, kein Anhaften der Folie und kein Abdruck auf der Oberfläche |
| Beisiel A-12 | Nach 25 DH prakt. keine oder nur sehr geringe Filzanfärbung und keine Rillenbildung auf der Oberfläche | Kein Verblocken, kein Angriff der Oberfläche | Kein Verblocken, kein Anhaften der Folie und kein Abdruck auf der Oberfläche |

## Patentansprüche

1. Wäßrige Dispersionen filmbildender Polymerisate zum Überziehen von festen Kunststoffoberflächen auf Basis von Poly(meth)acrylsäureestern,
dadurch gekennzeichnet,
daß die filmbildenden Polymerisate FP aufgebaut sind aus den Monomerkomponenten

A. 99,9 bis 9,5 Gew.-% der Formel II

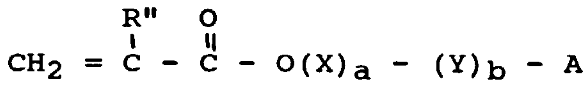

(II)

worin

X für eine gegebenenfalls verzweigte Alkylengruppe mit 1 bis 6 Kohlenstoffatomen und
a für 0 oder 1
Y für Sauerstoff oder $NR_1$, worin $R_1$ Wasserstoff oder einen $C_1$-$C_4$-Alkylrest bedeutet
b für 0 oder 1 und
A für einen $C_6$-$C_{10}$-Arylrest, insbesondere Phenyl, gegebenenfalls mit $C_1$-$C_4$-Alkyl substituiert oder Naphthyl

steht,
mit der Maßgabe, daß, wenn a für 0 steht, b ebenfalls 0 sein soll,

B. 0,5 bis 10 Gew.-% mindestens einer mit Methoxyoligo- oder Methoxypolyethylenglykolen substituierten Vinylverbindung

C. 0 bis 90 Gew.-% mindestens eines Vinylmonomeren der Formel III

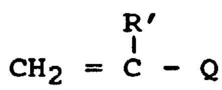

(III)

worin

Q für einen Rest

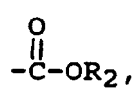

wobei $R_2$ einen Alkyl- oder Cycloalkylrest mit 1 bis 8 Kohlenstoffatomen bedeutet oder für einen gegebenenfalls mit einer Methylgruppe substituierten Phenylrest steht und worin R' für Wasserstoff oder Methyl steht

D. 0 bis 15 Gew.-% eines oder mehrerer vernetzenden Monomeren FM

E. 0 bis 5 Gew.-% an radikalisch polymerisierbaren Carbonsäuren und

F. 0 bis 20 Gew.-% an weiteren copolymerisierbaren Monomeren.

2. Wäßrige Dispersionen gemäß Anspruch 1, dadurch gekennzeichnet, daß die mit einem Methoxyoligo- oder Methoxypolyethylenglykolen veresterten Methacrylsäureester der Gruppe B die Formel I

$$CH_2 = \overset{\overset{\displaystyle R}{|}}{C} - \overset{\overset{\displaystyle O}{\|}}{C} -(- O\ CH_2\ CH_2)_n - OR_1 \qquad (I)$$

worin R für Wasserstoff oder Methyl, $R_1$ für Methyl und n für eine Zahl von 3 bis 60 steht, besitzen.

**3.** Wärßrige Dispersionen gemäß den Ansprüchen 1 und 2, dadurch gekennzeichnet, daß das vernetzende Monomere FM der Gruppe D. 2-Acetoacetoxyethyl(meth)acrylat ist.

**4.** Wäßrige Dispersionen gemäß den Ansprüchen 1 bis 3, dadurch gekennzeichnet, daß als Monomerkomponente C. aus Estern der (Meth)acryläsure der Formel III, worin $R_2$ für C1-C4-Alkyl steht, gebildet wird.

**5.** Wäßrige Dispersionen gemäß Anspruch 4, dadurch gekennzeichnet, daß die Monomerkomponente C. aus Methylmethacrylat und Ethylacrylat gebildet wird.

**6.** Wäßrige Dispersionen gemäß Anspruch 5, dadurch gekennzeichnet, daß Methylmethacrylat und Ethylacrylat im Verhältnis 10 : (20 ± 2) Gew.-Teilen stehen und die Summe beider im Bereich 25 - 40 Gew.-% bezogen auf die Summe der Monomeren liegt.

**7.** Wäßrige Dispersionen gemäß den Ansprüchen 1 bis 6, dadurch gekennzeichnet, daß sie nach dem Verfahren der Emulsionspolymerisation hergestellt worden sind.

**8.** Wäßrige Dispersionen gemäß den Ansprüchen 1 bis 7, dadurch gekennzeichnet, daß die filmbildenden Polymerisate FP Kern-Schale-Polymeisate darstellen.

**9.** Wäßrige Dispersionen gemäß den Ansprüchen 1 bis 3, dadurch gekennzeichnet, daß zur Vernetzung Di- oder Polyamine zugesetzt wurden.

**10.** Verwendung der wäßrigen Dispersionen filmbildender Polymerisate gemäß den Ansprüchen 1 bis 9 zum Überziehen fester Kunststoffoberflächen.

**Claims**

**1.** Aqueous dispersions of film-forming polymers for coating solid plastic surfaces based on poly(meth)acrylic acid esters, characterised in that the film-forming polymers FP are synthesised from the monomer components

A. 99.9 to 9.5 wt.% of formula II

$$CH_2 = \overset{\overset{\displaystyle R''}{|}}{C} - \overset{\overset{\displaystyle O}{\|}}{C} - O(X)_a - (Y)_b - A \qquad (II)$$

wherein

| | |
|---|---|
| X | is an optionally branched alkylene group having 1 to 6 carbon atoms and |
| a | denotes 0 or 1 |
| Y | denotes oxygen or $NR_1$, wherein $R_1$ is hydrogen or a $C_1$-$C_4$-alkyl group |
| b | denotes 0 or 1 and |
| A | is a $C_6$-$C_{10}$-aryl group, preferably phenyl, optionally substituted with $C_1$-$C_4$-alkyl, or naphthyl |

with the proviso that if a denotes 0, b should also denote 0,

B. 0.5 to 10 wt.% of at least one vinyl compound substituted with methoxyoligo or methoxypolyethylene glycols

C. 0 to 90 wt.% of at least one vinyl monomer of formula III

$$CH_2=C(R')-Q \qquad (III)$$

wherein Q denotes a group

$$-C(=O)-OR_2,$$

wherein $R_2$ is an alkyl or cycloalkyl group having 1 to 8 carbon atoms or a phenyl group optionally substituted with a methyl group and wherein R' denotes hydrogen or methyl

D. 0 to 15 wt.% of one or more cross-linking monomers FM

E. 0 to 5 wt.% of radically polymerisable carboxylic acids and

F. 0 to 20 wt.% of further copolymerisable monomers.

**2.** Aqueous dispersions according to claim 1, characterised in that the methacrylic acid esters of group B, which are esterified with a methoxyoligo or methoxypolyethylene glycol have the formula I

$$CH_2=C(R)-C(=O)-(-O\,CH_2\,CH_2)_n-OR_1 \qquad (I)$$

wherein R denotes hydrogen or methyl, $R_1$ denotes methyl and n is an integer from 3 to 60.

**3.** Aqueous dispersions according to claims 1 and 2, characterised in that the cross-linking monomer FM of group D is 2-acetoacetoxyethyl (meth)acrylate.

**4.** Aqueous dispersions according to claims 1 to 3, characterised in that the monomer component C is formed from esters of (meth)acrylic acid of formula III wherein $R_2$ is $C_1$-$C_4$-alkyl.

**5.** Aqueous dispersions according to claim 4, characterised in that monomer component C is formed from methyl methacrylate and ethyl acrylate.

**6.** Aqueous dispersions according to claim 5, characterised in that the methyl methacrylate and ethyl acrylate are in a ratio of 10 : (20 ± 2) parts by weight and that the sum of both is within the range of 25 - 40 wt.% based on the sum of the monomers.

**7.** Aqueous dispersions according to claims 1 to 6, characterised in that they have been prepared by the method of emulsion polymerisation.

**8.** Aqueous dispersions according to claims 1 to 7, characterised in that the film-forming polymers FP are core-shell polymers.

**9.** Aqueous dispersions according to claims 1 to 3, characterised in that di- or polyamines are added for cross-linkage.

**10.** Use of the aqueous dispersions of film-forming polymers according to claims 1 to 9 for coating solid plastic surfaces.

## Revendications

1. Dispersion aqueuse de polymères filmogènes pour le revêtement de surfaces solides de matières synthétiques à base d'ester d'acide poly(méth)acryliques, caractérisée en ce que les polymères filmogènes PF sont constitués de composants monomères

A. De 99,5 à 9,5 % en poids, de formule II

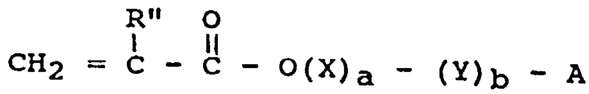 (II)

dans laquelle

X représente un groupe alkylène avec 1 à 6 atomes de carbone éventuellement ramifié et a vaut 0 ou 1,
Y représente un oxygène ou $NR_1$, où $R_1$ représente un hydrogène ou un radical alkyle en $C_1$ à $C_4$,
b vaut 0 ou 1 et
A représente un radical aryle en $C_6$ à $C_{10}$, en particulier un phényle, le cas échéant substitué par un alkyle en $C_1$ à $C_4$ ou un naphtyle,
sous réserve que lorsque a vaut 0, b doit également valoir 0.

B. De 0,5 à 10 % en poids, d'au moins un composé de vinyle substitué avec des méthoxyoligo- ou méthoxypolyéthylèneglycols.
C. De 0 à 90 % en poids, d'au moins un monomère de vinyle de formule III

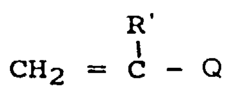 (III)

où Q représente un radical

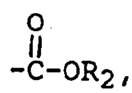

dans lequel $R_2$ représente un radical alkyle ou cycloalkyle avec 1 à 8 atomes de carbone ou représente un radical phényle éventuellement substitué par un groupe méthylène et où R' représente un hydrogène ou un méthyle.
**D.** De 0 à 15 % en poids, d'un ou plusieurs monomères FM réticulents.
**E.** De 0 à 5 % en poids d'acides carboxyliques polymérisables par voie radicalaire et
**F.** De 0 à 20 % en poids d'autres monomères copolymérisables.

2. Dispersion aqueuse selon la revendication 1, caractérisée en ce que les esters d'acide méthacrylique estérifiés avec un méthoxyoligo- ou méthoxypolyéthylène glycol, et appartenant au groupe B, possèdent la formule

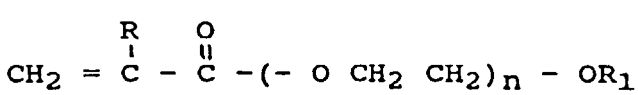 (I)

dans laquelle R représente un hydrogène ou un méthyle, $R_1$ représente un méthyle, et n un nombre allant de 3 à 60.

**3.** Dispersions aqueuses selon les revendications 1 et 2, caractérisées en ce que le monomère réticulent FM du groupe D est le (méth)acrylate de 2-acétoacétoxyéthyle.

**4.** Dispersions aqueuses selon les revendications 1 à 3, caractérisées en ce qu' on les forme comme composant monomère C à partir d'esters de l'acide (méth)acrylique de formule III, dans laquelle $R_2$ représente un alkyle avec 1 à 4 atomes de carbone.

**5.** Dispersions aqueuses selon la revendication 4, caractérisée en ce que le composant monomère C est formé à partir de méthacrylate de méthyle et d'acrylate d'éthyle.

**6.** Dispersions aqueuses selon la revendication 5, caractérisées en ce que

le méthacrylate de méthyle et l'acrylate d'éthyle sont dans un rapport de 10: (20 ± 2) parties en poids et en ce que
la somme des deux se situe dans un intervalle de 25 à 40 % en poids par rapport à la somme des monomères.

**7.** Dispersions aqueuses selon les revendications 1 à 6, caractérisées en ce qu' elles sont fabriquées selon le procédé de la polymérisation en émulsion.

**8.** Dispersions aqueuses selon les revendications 1 à 7, caractérisées en ce que les polymères filmogènes PF représentent des polymères à noyau-enveloppe.

**9.** Dispersions aqueuses selon les revendications 1 à 8, caractérisées en ce que pour la réticulation on ajoute des di- ou polyamines.

**10.** Utilisation des dispersions aqueuses de polymères filmogènes selon les revendications 1 à 9 pour le revêtement des surfaces de matières plastiques.